# EUROPEAN PATENT APPLICATION

(11) **EP 1 860 533 A2**
(43) Date of publication of application: **28.11.2007**
(21) Application number: 07008975.0
(22) Date of filing: 03.05.2007
(51) Int. Cl.: G06F 3/048, G06F 9/44

(54) **Systems and methods for relating data to a task**

(30) Priority: 08.05.2006 US 429809
(71) Applicant: SAP AG, 69190 Walldorf (DE)
(72) Inventor: Stienhans, Frank, Palo Alto, CA 94304 (DE)
(74) Representative: Müller-Boré & Partner Patentanwälte

(57) **Abstract**

Methods and systems are disclosed that include selecting an identifier for a task. An instance of a first application and an instance of a second application are associated with the task. The first and second applications differ.

## Description

### FIELD OF INVENTION

The invention relates to methods and systems for managing and storing data.

### BACKGROUND

Today's processors have enough processing power to enable a user to run more than one application at a time. A user can have multiple instances of a variety of applications running at the same time on his processor. At some point, the number of application instances running on a processor can make it difficult for a user to keep track of each instance.

In an effort to help the user organize application instances, Microsoft includes features in Windows XP that groups application instances of the same type together. One such feature groups application instances together in the toolbar. For example, where a user has four Word application instances and many other instances running on his processor, Windows XP may display the Word icon and the phrase "4 Microsoft Office Word" in one task block in the task bar to represent each of the four Word application instances. Similarly, for another example, where a user has six Outlook application instances and many other instances running on his processor, Window XP may display the Outlook icon and the phrase "6 Microsoft Office Outlook" in one task block in the task bar to represent each of the six Outlook application instances.

Generally, the user can switch between application instances in Windows XP by selected the associated block in the task bar. When application instances are grouped by type, the user can select from among the grouped instances on a menu associated with a group block in the task bar. This grouping feature of Windows XP may not be helpful to a user.

Another Windows XP feature groups application instances of the same type together by saving files of the same application type in the same default directory. For example, unless the user specifically selects another directory, each file associated with an instance of Word is saved in the "My Documents" folder on the Desktop. Similarly, for another example, each file associated with an instance of Mindjet Mindmanager is typically saved in the "My Maps" subfolder of the "My Documents" folder unless the user specifically selects another directory. Similarly, for another example, each file associated with an instance of picture editing tool is typically saved in the "My Pictures" subfolder of the "My Documents" folder unless the user specifically selects another directory.

GNU Linux also includes a feature designed to help the user organize application instances--Linux Virtual Desktops. In its default configuration, the Mandrake 10.0 implementation of K Desktop Environment (KDE) desktop and taskbar includes four box-like icons numbered 1, 2, 3, and 4. Each numbered icon corresponds to a Virtual Desktop. Each numbered icon also indicates if an application instance has been opened in the corresponding Virtual Desktop. In one implementation, a Virtual Desktop icon will include a little rectangle when an application instance has been opened in that Virtual Desktop. In another implementation, each Virtual Desktop is represented by a thumbnail representation of the application instances running on that Virtual Desktop. The icon corresponding to the Virtual Desktop displayed on the monitor screen is differentiated from the other Virtual Desktop icons. For example, the icon corresponding to the displayed Virtual Desktop can appear white unlike the other icons.

The user can switch between Linux Virtual Desktops by selecting the associated icon or by using a keyboard shortcut. Nonetheless, to use an application instance, the user must remember in which Virtual Desktop the application instance has been opened.

There is thus a need to organize application instances in a more user-friendly or task-oriented way.

### SUMMARY OF EXEMPLARY EMBODIMENTS

Methods and systems are disclosed that include selecting an identifier for a task. One embodiment consistent with principles of the invention is a method for organizing data relating to a task. The method includes selecting an identifier for a task and creating a directory for information associated with the task. A first instance of a first application and a first instance of a second application are created. The first application and the second application differ. The first instance of the first application and the first instance of the second application are associated with the task. Data from the first instance of the first application and data from the first instance of the second application are saved in the directory.

Another embodiment consistent with principles of the invention is a method of for saving a working context. The method includes selecting an identifier for a task and creating a directory for information associated with the task. A first instance of a first application and a first instance of a second application are created. The first application and the second application differ. The first instance of the first application and the first instance of the second application are associated with the task. A state of the first instance of the first application and a state of the first instance of the second application are saved in the directory.

Another embodiment consistent with principles of the invention is a method for displaying a working context for a task. The method includes selecting an identifier for a task. A first instance of a first application and a first instance of a second application are created. The first application and the second application differ. The first instance of the first application and the first instance of the second application are associated with the task. In response to a selection of a second identifier for a second task, the first identifier is displayed as a representation of the application instances associated with the first task.

Additional embodiments consistent with principles of the invention are set forth in the detailed description which follows or may be learned by practice of methods or use of systems or articles of manufacture disclosed herein.

### BRIEF DESCRIPTION OF THE DRAWINGS

The accompanying drawings, which are incorporated in and constitute a part of this specification, illustrate several embodiments consistent with aspects of the invention and together with the description, serve to explain the principles of the invention. In the drawings:

FIG. 1 illustrates an exemplary display of a plurality of application instances associated with a task, consistent with features and principles of the present invention;

FIG. 2 illustrates an exemplary display of one of a plurality of application instances associated with a task, consistent with features and principles of the present invention;

FIG. 3 illustrates an exemplary display of two of a plurality of application instances associated with a task, consistent with features and principles of the present invention;

FIG. 4 illustrates an exemplary menu of a tool for managing information related to a task, consistent with features and principles of the present invention;

FIG. 5 illustrates an exemplary graphical user interface of a tool for creating a directory for information associated with a task, consistent with features and principles of the present invention; and

FIG. 6 illustrates an exemplary menu of a tool for managing information related to a task, consistent with features and principles of the present invention.

### DETAILED DESCRIPTION

Reference is now made in detail to exemplary embodiments of the invention, examples of which are illustrated in the accompanying drawings.

Methods and systems that organize data relating to a task consistent with principles of the present invention are disclosed herein. Generally, a user may use a plurality of application instances when working on a single task. The invention is based at least in part on the recognition that application instances should be groupable by task. Embodiments of the invention save data from application instances associated with the task in a directory created for the task and identified by a task identifier. Embodiments of the invention include a graphical tool for organizing application instances.

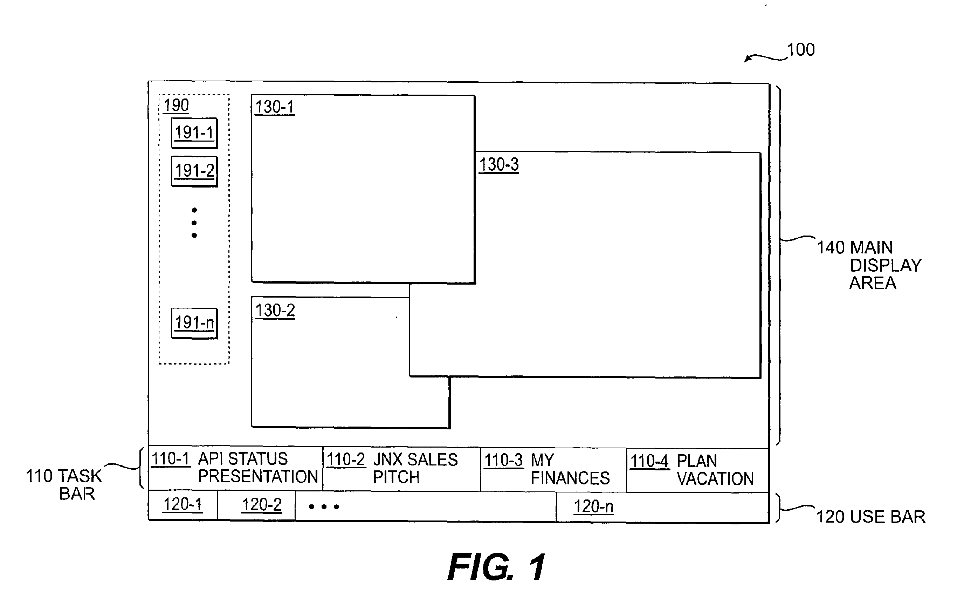

FIG. 1 illustrates an exemplary display 100 of a plurality of application instances associated with a task, consistent with features and principles of the present invention. In particular, FIG. 1 illustrates an exemplary display on a monitor associated with a processor having a memory. FIG. 1 includes a task bar 110, a use bar 120, and a main display area 140.

Task bar 110 includes blocks 110-1, 110-2, 110-3, and 110-4-one for each of the open tasks running on the relevant processor. Each block includes an identifier for the relevant task. The purpose of the identifier is to enable the user to locate application instances by their association with a task. FIG. 1 illustrates, for example, four open tasks running on the relevant processor: task 110-1 is identified as "API status presentation," task 110-2 is identified as "JNX sales pitch," task 110-3 is identified as "my finances," and task 110-4 is identified as "plan vacation." If a different number of tasks were open at any time on the relevant processor, there would be a different number of blocks in task bar 110. Task bar 110 can alternatively include one or more icons which serve the same purpose as blocks 110-1, 110-2, 110-3, 110-4. Similarly, different identifiers can be used for the open tasks.

The task bar of the task whose application instances are displayed in the main display area 140 is distinguished from the others in task bar 110. For example, the background color of the task bar whose associated application instances are displayed in the main display area 140 can differ from the background color of the others in task bar 110. For another example, the lines delineating the block of the task bar whose associated application instances are displayed in the main display area 140 may be thicker than the lines delineating the blocks of the others in task bar 110.

The user can switch between tasks by using the mouse or a keyboard shortcut to select the associated task block. When a task block is selected, the application instances, which are running on the relevant processor and associated with the selected task, are displayed in the main display area 140. When a task block is selected, it is then distinguished from the others in task bar 110.

Use bar 120 includes one or more portions dedicated to providing the user access to information or services. Use bar 120 can include, for example as illustrated, a plurality of blocks 120-1, 120-2, ..., 120-n. Block 120-2, for example, can enable the user to access applications available in memory. Block 120-2, for another example, can display a relevant processor time. Block 120-2, for another example, can enable the user to modify the configuration of a relevant processor. Use bar 120 can alternatively include one or more icons or other designators which serve the same purpose as blocks 120-1, 120-2, ... , 120-n. Windows XP includes an exemplary use bar 120.

Main display area 140 in FIG. 1 includes icon field 190 and application instances 130-1, 130-2, 130-3. Icon field 190 includes one or more icons 191-1, 191-2, ..., 191-n. Each icon in icon field 190 enables the user to access a resource. Icon 191-1, for example, can enable a user to access the Microsoft Word application. Icon 191-2, for another example, can enable a user to access a memory area, such as a disk drive or a folder. Icon 191-n, for another example, can enable a user to access a file. Windows XP includes an exemplary icon field 190. Main display area 140 can alternatively include one or more blocks or other designators which serve the same purpose as icons 191-1, 191-2,..., 191-n.

Application instances 130-1, 130-2, 130-3 in main display area 140 are associated with one of the tasks 110-1, 110-2, 110-3, 110-4 in task bar 110. In particular, each of application instances 130-1, 130-2, 130-3 is associated with the selected open task. Application instances 130-1, 130-2, 130-3 can be an instance of any application, such as Word, PowerPoint, Outlook, Excel, Visio, Adobe Acrobat Reader, Internet Explorer, Paint, SAP GUI, Mozilla Firefox, and Yahoo Messenger. Application instances 130-1, 130-2, 130-3 can include more than one instance of the same application. For example, application instances 130-1, 130-2, 130-3 can all be instances of the Microsoft Word application. Depending on how the user configures the display of application instances, application instances 130-1, 130-2, 130-3 can overlap one another as illustrated in FIG. 1. Similarly, application instances 130-1, 130-2, 130-3 can overlap or completely obscure icon field 190.

When a task is selected, the user gains access to the application instances associated with the selected task. When application instances 130-1, 130-2, 130-3 are associated with task 110-1 and task 110-1 is selected, for example, the user gains access to application instances 130-1, 130-2, 130-3. When a new task 110-2 is selected, for example, the user gains access to the application instances associated with task 110-2.

One way that application instances can be associated with a task is to create a task directory for the task. Every application instance whose data or state is saved in that task directory is associated with that task. This approach enables application instances associated with a task to share information. For example, the task directory can include a set of short-cut keys that are recognized and can be used in any of the application instances associated with that task. The short-cut keys may not be recognized or used in application instances that are not associated with that task. For another example, the task directory can include default formats such that all applications instances associated with that task share a default font and, where applicable, a logo.

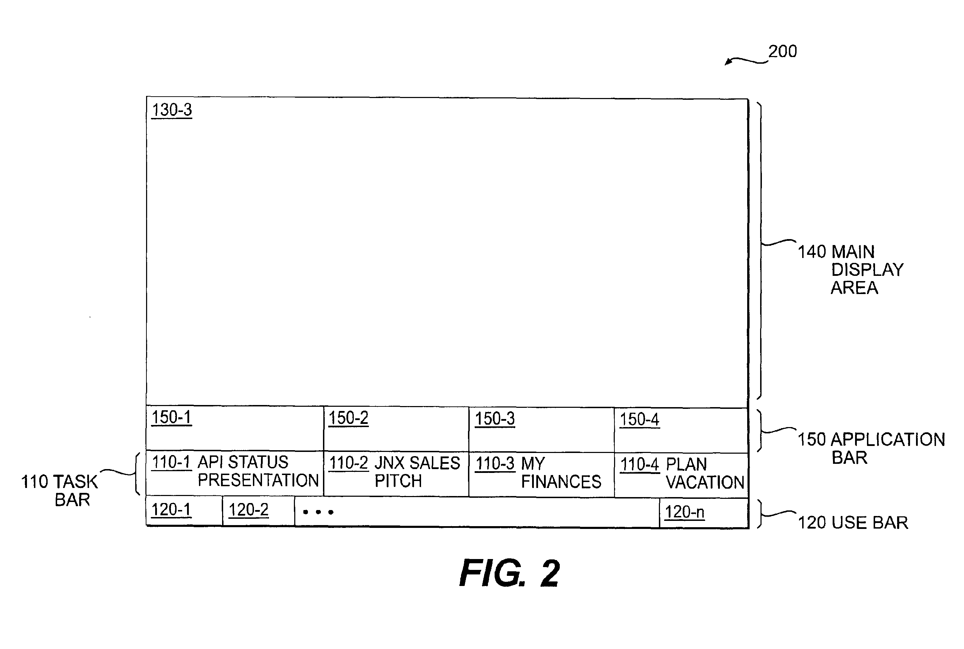

FIG. 2 illustrates an exemplary display 200 of one of a plurality of application instances associated with a task, consistent with features and principles of the present invention. Similar to FIG. 1, FIG. 2 includes a task bar 110, a use bar 120, and a main display area 140. Like the task bar in FIG. 1, task bar 110 in FIG. 2 includes one block for each of the open tasks running on the relevant processor.

FIG. 2 also includes an application bar 150. Unlike FIG. 1, the main display area 140 of FIG. 2 displays only one application instance 130-1 associated with the selected task. Application bar 150 includes blocks 150-1, 150-2, 150-3, and 150-4-one for each of the open application instances associated with the selected task. If a different number of application instances associated with the selected task were open at any time on a relevant processor, there would be a different number of blocks in application bar 150. The purpose of application bar 150 is to enable the user to identify and select application instances that are associated with the task.

In one embodiment, each of the blocks in application bar 150 includes an identifier of the open application instance associated with the selected task. For example, where application instance 130-1 is an instance of PowerPoint entitled "API Status," block 150-1 would include the "API status" identifier if it corresponds to application instance 130-1.

An application instance displayed in the main display area 140, such as application instance 130-1 in FIG. 2, can be distinguished from other application instances in application bar 150. For example, the background color of the block in application bar 150 that corresponds to the application instance displayed in the main display area 140 can differ from the background color of the others in application bar 150. For another example, the lines delineating the block corresponding to the application instance displayed in the main display area 140 may be thicker than the lines delineating the blocks of the other application instances in application bar 150.

The user can switch between application instances by using the mouse or a keyboard shortcut to select the associated block in application bar 150. When a new task is selected, application bar 150 is updated to include one block for each application instance that is running on a relevant processor and associated with the selected task.

Alternatively, application bar 150 can include a block for each application instance saved in the selected task directory. Similarly, application bar 150 can alternatively include one or more icons or other designators which serve the same purpose as blocks 150-1, 150-2, 150-3, and 150-4.

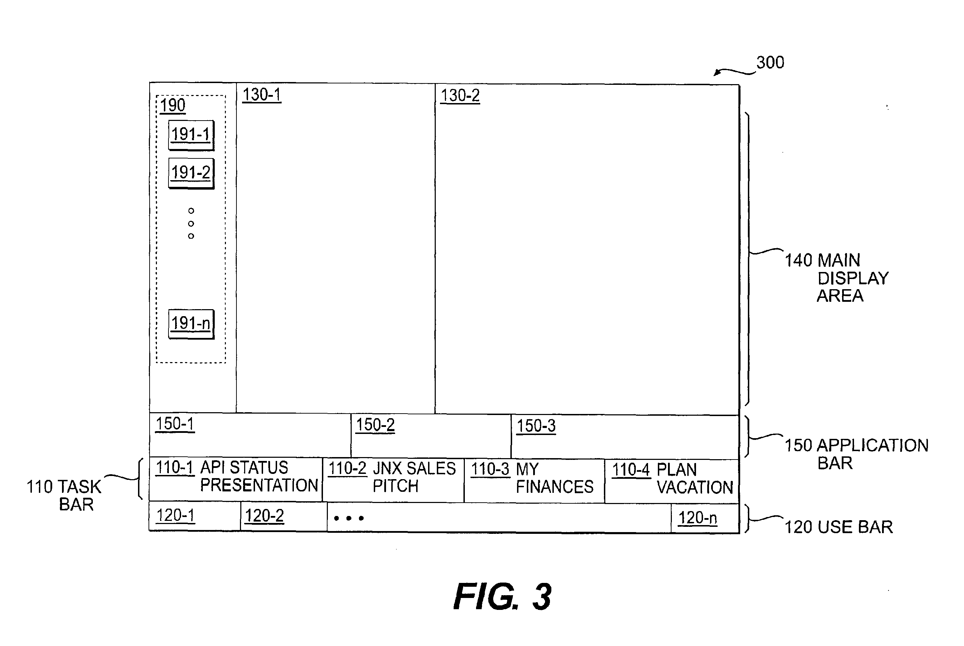

FIG. 3 illustrates an exemplary display 300 of two of a plurality of application instances associated with a task, consistent with features and principles of the present invention. Similar to FIG. 2, FIG. 3 includes a task bar 110, a use bar 120, a main display area 140, and an application bar 150. Unlike FIG. 2, the main display area 140 of FIG. 3 displays two application instances 130-1, 130-2 associated with the selected task. Application bar 150 includes blocks 150-1, 150-2, and 150-3-one for each of the open application instances associated with the selected task. As FIG. 3 illustrates, application bar 150 can be used when more than one application instance is displayed in main display area 140.

Depending on how the user configures the display of application instances, application instances 130-1, 130-2 need not overlap one another as illustrated in FIG. 3. Similarly, application instances 130-1, 130-2, 130-3 can overlap or completely obscure icon field 190.

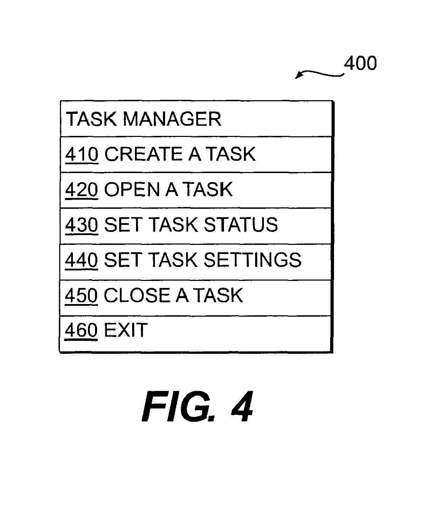

FIG. 4 illustrates an exemplary menu 400 of a tool for managing information related to a task, consistent with features and principles of the present invention. In particular, FIG. 4 illustrates an exemplary display of a graphical user interface on a monitor associated with a processor having a memory. Menu 400 enables a user to manage tasks. FIG. 4 includes a plurality of exemplary options including "create a task" 410, "open a task" 420, "set task status" 430, "set task settings" 440, "close a task" 450, and "exit" 460. Selection of one or more of the foregoing options can trigger the generation of a menu or other graphical user interface. Selection of one or more of the foregoing options may trigger the execution of an operand. For example, selection of option 460 "exit" can trigger the termination of the display of menu 400 and return to the previous display. Different and/or additional options can be included in menu 400. Additionally, options in menu 400 may be designated differently.

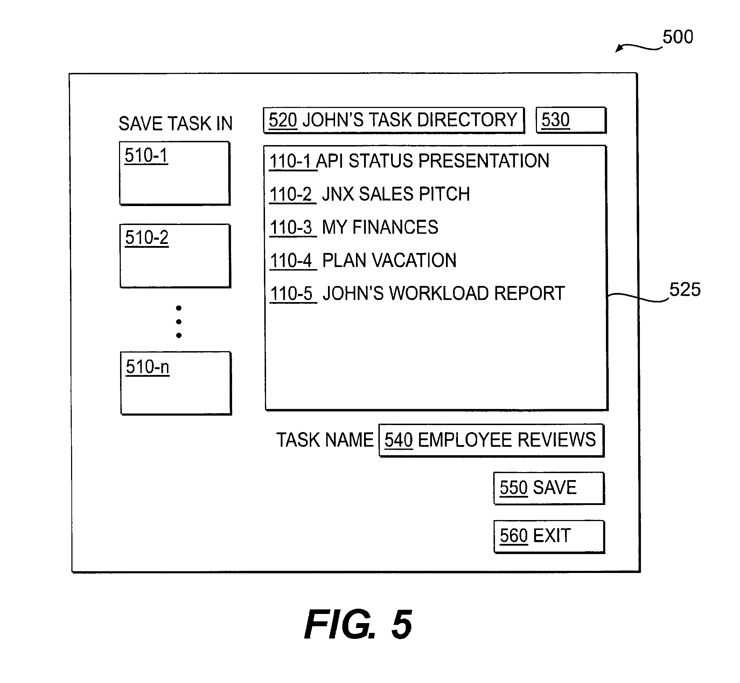

FIG. 5 illustrates an exemplary graphical user interface 500 of a tool for creating a directory for information associated with a task, consistent with features and principles of the present invention. Interface 500 can be generated, for example, whenever a user selects option 410 "create a task" of menu 400. Interface 500 enables a user to create a task directory. Interface 500 includes a list of resources 510, a current directory 520, a list of the contents 525 in the current directory 520, a navigation tool 530, a task identifier input area 540, and operand keys 550, 560.

Resources 510 include individual resources 510-1, 510-2,..., 510-n. Individual resources 510-1, 510-2, ... , 510-n can include, for example, a memory device associated with a processor running the task manager tool, a memory device networked to the processor, or a specific area within either of the foregoing devices. Networked memory devices can be shared by a plurality of users. By selecting an individual resource 510-1, 510-2,..., or 510-n from resources 510, the user moves to a particular directory. The current directory 520 is identified and its contents 525 are displayed for the user. For example, interface 500 in FIG. 5 illustrates that the user is at the directory titled "John's Task Directory" 520, which includes five task directories 110-1, 110-2, 110-2, 110-3, 110-4, 110-5. The identifier of each task in the current directory 520 is displayed. For example, task 110-1 is identified as "API status presentation." Navigation tool 530, for example, enables the user to change his directory location with respect to the current directory 520.

Once the user is in the directory he wants, he enters an identifier for the task whose associated directory is being created in input area 540. Once the identifier is entered, the user can select the "save" operand key 550 to create a task directory. Alternatively, the user can select the "cancel" operand key 560 to trigger the removal of menu 400 and return to the previous display. FIG. 5 illustrates interface 500 ready to create a directory for a task identified as "employee reviews" in the current directory 520 "John's task directory."

Once a task directory is created, each associated application instance is saved in the task directory. Embodiments of the invention associate an application instance with a task by creating the application instance while the user is working in the task's directory. Referring again to FIG. 1, if application instances 130-1, 130-2, 130-3 are associated with task 110-1, then the user is working in the directory associated with task 110-1 and application instances 130-1, 130-2, 130-3 are saved in that directory. Additionally, if the user creates a new application instance, for example by selecting icon 191-2, the new application instance will be associated with the directory for task 110-1. Embodiments of the invention associate an application instance with a task when a user selects the task's directory while saving the application instance. Any data from an application instance, which can include the state of the application instance, can be saved in the associated task directory. Temporary back-ups of application instances, for example, can be saved in the associated task directory.

The user can begin working on an existing task without creating a new task directory. To do so, the user selects option 420 "open a task" in menu 400. The selection of option 420 triggers the generation of a list of available tasks. A task manager tool can enable a user to browse resources 510 in order to find all of the available tasks. Once an existing task is selected, associated application instances can be launched. Some embodiments of the invention launch all associated application instances in when an existing task is selected by the user. Other embodiments of the invention launch only those associated application instances that were running when the selected existing task was closed.

The user can also close an open task by selecting option 450 "close a task" in menu 400. The selection of option 450 can trigger the task manager tool to save the state of each associated application that is running to the relevant task directory. In embodiments of the invention, the process triggered by the selection of option 450 is similar to the user individually closing each application instance that is both running and associated with the task being closed. Similarly, the user can set the status of a selected task by selecting option 430 "set task status" in menu 400.

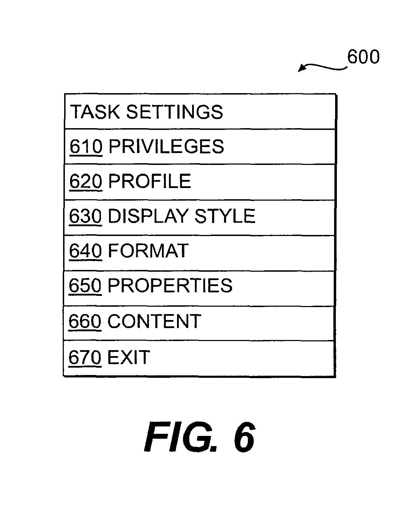

FIG. 6 illustrates an exemplary menu 600 of a tool for managing information related to a task, consistent with features and principles of the present invention. Menu 600 can be generated, for example, whenever a user selects option 440 "set task settings" in menu 400. Menu 600 enables a user to specify the settings of a particular task. Menu 600 includes a plurality of exemplary setting options including "privileges" 610, "profile" 620, "display style" 630, "format" 640, "properties" 650, "content" 660, and "exit" 670. Selection of one or more of the foregoing options can trigger the execution of an operand. For example, selection of option 670 "exit" can trigger the termination of the display of menu 600 and return to the previous display. Different and/or additional options can be included in menu 600. Additionally, options in menu 600 may be designated differently.

Selection of one or more of the options in menu 600 can trigger the generation of a menu or other graphical user interface. Selection of "privileges" option 610 can enable the user to select who can read and/or write to application instances associated with the selected task. Privileges can be specified for an individual user or a group of users. For example, the user can specify that all users within a set of users associated with a related project can read application instances associated with the selected task. Selection of "profile" option 620 can enable a user to specify one or more activities to be triggered when the selected task has a certain status. For example, when a task has a "complete" status, the transmission of an email can be triggered. Similarly, when a task has a "complete" status, the generation of a document can be triggered. Additionally or alternatively, selection of "profile" option 620 can enable a user to select from among standard task settings.

Selection of "display style" option 630 can enable the user to set the style of display for the selected task. For example, the display style can include a color scheme. Selection of "format" option 640 can enable a user to choose the format of certain application instances associated with the selected task. For example, all Powerpoint application instances may include a logo when they are created. Selection of "properties" option 650 can enable the user to specify flags which can be used in any application instance associated with the task. For example, short-cut key combinations in the properties of a selected task may have the same effect in each associated application instance. Selection of "content" option 660 can enable the user to specify how content is to be shared between application instances associated with the selected task. For example, the user may specify that a table in a Word document that is derived from an Excel spreadsheet is automatically updated when the Word document is opened or saved.

A task may be set to close automatically after a specified period of time without receiving any user input related to the task. For example, using "profile" option 620 in menu 600, the user can specify that the selected task automatically close if the relevant processor has received no user input related to the task within the last 20 minutes. Embodiments of the invention save a "snapshot" of any application that is both running and associated with the selected task when that activity is triggered. U.S. patent Application No. 10/188,299--which is entitled "Providing Stateful Favorites," which was filed on July 1, 2002, which was published as Pub. No. US 2003/0225891 on December 4, 2003, and which is hereby incorporated by reference--discloses how to save a state of an application instance. Once a state of an application instance has been saved in the associated task directory, opening the task can include displaying the associated application instance in its restored state.

Methods of the invention can be implemented in digital electronic circuitry, or in computer hardware, firmware, software, or in combinations of them. Apparatus of the invention can be implemented in a computer program product tangibly embodied in an information carrier, e.g., in a machine-readable storage device or in a propagated signal, for execution by a programmable processor; and method steps of the invention can be performed by a programmable processor executing a program of instructions to perform functions of the invention by operating on input data and generating output. The invention can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the invention can be implemented on a computer having a display device, such as a CRT (cathode ray tube) or LCD (liquid crystal display) monitor for displaying information to the user and a keyboard and a pointing device such as a mouse or a trackball by which the user can provide input to the computer.

The invention can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication.

In the foregoing description, various features are grouped together for purposes of streamlining the disclosure. This method of disclosure is not to be interpreted as reflecting an intention that the claimed invention requires more features than are expressly recited in each claim. Rather, as the following sample claims reflect, inventive aspects may lie in fewer than all features of a single foregoing disclosed embodiment. Thus, the following claims are hereby incorporated into this description, with each claim standing on its own as a separate embodiment of the invention.

## Claims

1. A method for organizing data relating to a task comprising:
selecting an identifier for a task;
creating a directory for information associated with the task;
creating a first instance of a first application;
associating the first instance of the first application with the task;
creating a first instance of a second application, wherein the first application and second application differ;
associating the first instance of the second application with the task;
saving data from the first instance of the first application in the directory; and
saving data from the first instance of the second application in the directory.

2. The method of claim 1 wherein selecting an identifier for a task comprises creating a new identifier.

3. The method of claim 1 or 2 wherein selecting an identifier for a task comprises choosing from a list of existing identifiers.

4. The method of any one of the preceding claims, wherein associating the first instance of the first application with the task comprises choosing the identifier from the list of existing identifiers.

5. The method of any one of the preceding claims, wherein associating the first instance of the first application with the task comprises creating the first instance from within the directory.

6. The method of any one of the preceding claims, wherein the first instance of the first application and the first instance of the second application share information saved in the directory.

7. The method of any one of the preceding claims, wherein saving data from the first instance of the first application in the directory comprises saving a state of the first instance of the first application in the directory and wherein saving data from the first instance of the second application in the directory comprises saving a state of the first instance of the second application in the directory.

8. The method of claim 7 further comprising restoring the state of the first instance of the first application in the directory and the state of the first instance of the second application in the directory in response to a selection of the task.

9. The method of claim 8 further comprising displaying the first instance of the first application in its restored state in response to the selection of the task.

10. The method of any one of claims 7 to 9 wherein saving a state of the first instance of the first application in the directory and saving a state of the first instance of the second application in the directory comprises saving a state of the first instance of the first application and a state of the first instance of the second application in the directory after receiving no input relating to the task from the user for the predetermined period or time.

11. The method of any one of the preceding claims, wherein saving data from the first instance of the first application in the directory and saving data from the first instance of the second application in the directory further comprises saving a state of the first instance of the first application and a state of the first instance of the second application in the directory after receiving input from the user to the close the task.

12. The method of any one of the preceding claims, further comprising initiating an activity in response to input from the user indicating a status of the task.

13. The method of claim 12 wherein initiating an activity in response to input from the user indicating a status of the task comprises generating an email in response to input from the user indicating the task is complete.

14. A computer-readable medium comprising instructions to configure a computer to execute a method of organizing data relating to a task, the method comprising:
selecting an identifier for a task;
creating a directory for information associated with the task;
creating a first instance of a first application;
associating the first instance of the first application with the task;
creating a first instance of a second application, wherein the first application and second application differ;
associating the first instance of the second application with the task;
saving data from the first instance of the first application in the directory; and
saving data from the first instance of the second application in the directory.

15. The medium of claim 14 wherein the method further comprises restoring the state of the first instance of the first application in the directory and the state of the first instance of the second application in the directory in response to a selection of the task.

16. The medium of claim 15 wherein the method further comprises displaying the first instance of the first application in its restored state in response to the selection of the task.

17. A system for displaying a working context for a task comprising:
memory; and
a processor, wherein the memory and processor are configured to perform a method comprising:
selecting a first identifier for a first task;
associating a first instance of a first application with the first task;
associating a first instance of a second application with the task, wherein the first application and second application differ; and
displaying the first identifier as a representation of the application instances associated with the first task in response to a selection of a second identifier for a second task.

18. The system of claim 17 wherein the step of displaying the first identifier as a representation of the application instances in the method further comprises displaying the first identifier in a block.

19. The system of claim 17 or 18 wherein the step of displaying the first identifier as a representation of the application instances in the method further comprises displaying the first identifier next to an icon.

20. The system of any one of claims 17 to 19 wherein the method further comprises displaying the first instance of the first application associated with the first task and the first instance of the second application associated with the first task in the state each was before the selection of the second identifier in response to a selection of the first identifier.
